Europäisches Patentamt

European Patent Office

Office européen des brevets

(11) Publication number: **0 512 156 A1**

# EUROPEAN PATENT APPLICATION

(21) Application number: **91116493.7**

(22) Date of filing: **27.09.91**

(51) Int. Cl.⁵: **B01D 53/34**

(30) Priority: **07.05.91 IT MI911235**

(43) Date of publication of application:
**11.11.92 Bulletin 92/46**

(84) Designated Contracting States:
**AT BE CH DE DK ES FR GB GR IT LI LU NL SE**

(71) Applicant: **ENTE NAZIONALE PER L'ENERGIA ELETTRICA - (ENEL)**
**Via G.B. Martini 3**
**I-00198 Roma(IT)**

(72) Inventor: **Bertacchi, Sisto, c/o ENEL - CRTN**
**120, Via A. Pisano**
**I-56100 Pisa(IT)**
Inventor: **De Michele, Gennaro, c/o ENEL - CRTN**
**120, Via A. Pisano**
**I-56100 Pisa(IT)**
Inventor: **Malloggi, Stefano, c/o ENEL - CRTN**
**120, Via A. Pisano**
**I-56100 Pisa(IT)**

(74) Representative: **Ferraiolo, Ruggero et al**
**FERRAIOLO S.r.l., Via Napo Torriani, 10**
**I-20124 Milano(IT)**

(54) **A process for reducing nitric oxides in a flue gas.**

(57) A process for reducing nitric oxides in a flue gas.

A process for reducing nitric oxides in a flue gas in a boiler comprising simultaneously the steps of burning conventionally primary fuel in a primary zone and burning secondary fuel in a region in the boiler where gases are at a temperature approximately ranging from 1200°C and 1300°C, injecting close to said region a reducing agent generating $NH_i$ radicals and injecting air in a region where gases are at a temperature of about 1100°C - 1000°C.

FIG. 2

This present invention refers to a process for reducing nitric oxides ($NO_X$) in a flue gas, in particular in the gases produced by a combustion of liquid, solid and gaseous fuel in a boiler of an electric power plant.

The prior art comprises primarily two different techniques for reducing $NO_X$ in a boiler:

a) Controlling combustion in order to lower $NO_X$ contents by causing in the boiler zones having controlled stoichiometry and temperature; these techniques are referred to as - stage combustion primary- techniques and - smoke recirculation primary- techniques;

b) Reducing $NO_X$ contents in the gases coming out of a combustion chamber by introducing reactive substances ($NH_3$, carbamide, etc.) which are able to attack and destroy $NO_X$; these techniques are referred to as - selective non catalytic reduction- (SNCR) secondary techniques and - non selective and non catalytic reduction- (NSNCR) secondary techniques.

The applicant is the owner of the European patent application N° 89 120544.5 which discloses a mixture of carbamide, hydrated lime and water for reducing contaminating substances in the flue gases, in particular nitric oxides and sulphur dioxides, this being a mixture comprised in the techniques referred to in the above point b). The applicant is also owner of the European patent application N° 90 116443.4 which discloses a vanadium oxide catalyst or vanadium and wolfram oxide catalyst for reducing nitric oxides in a flue gas, this catalyst being not comprised in the above techniques, under a) and b).

The industrial applications of the above indicated techniques are not described here as being well known or knowable to a person skilled in this concerned field. However, a summary of a technique known as - reburning - is supplied herebelow, such a technique being comprised in the group of techniques referred to under above point a); reburning will be a useful reference when presenting the invented process.

According to reburning, a fuel is burnt in a conventional way in a primary zone (Lean Zone); subsequently, immediately out of said zone, a certain amount of secondary fuel is injected, at a rate from 10% to 20% of the total required heat, in order to cause a reducing atmosphere which is reach of radical hydrocarbons (Rich Zone) that attack and reduce elementary nitrogen $NO_X$; finally, the combustion is completed by introducing air in said primary zone. Reburning causes $NO_X$ damp in the range 50% to 70%.

The main drawback in the known techniques is the low efficiency. Moreover, some of said techniques involve high costs in the industrial applications.

The invented process is a techique intermediate between the two techniques mentionad above under a) and b) and could be referred to as - strengtheted reburning process -in consideration of its features.

Shortly explained, the invented process simultaneously comprises the steps of burning conventionally primary fuel in a primary zone in the combustion chamber and secondary fuel above said zone and, in a new way, the steps of: i) introducing and burning said secondary fuel in that region in the combustion chamber wherein gases are at a temperature approximately ranging from 1200°C and 1300°C above said primary zone in order to cause in the flue gases a slightly oxidative/reducing stoichiometry ; ii) injecting in said region a reducing agent comprising an ammoniac product, like ammonia, urea, amines and the like, able to produce $NH_i$ radicals which selectively strengthen the nitric oxides reduction process; iii) in an higher region wherein gases are at a temperature approximately ranging from 1100°C and 1000°C, adding an amount of secondary air in order to oxidize completely the residual fuel and the non reduced residual radicals $NH_i$.

The secondary fuel may be natural gas, fuel oil, coal. The amount of secondary fuel as added in said higher region ranges from 5% to 15% of the total required heat.

The main chemical reactions in said region in the combustion chamber above the flame generated by the primary fuel combustion are shown herebelow:

(1) Ammoniac products ---> $NH_i$ + $H_iO$

(2) $NH_i$ + (H, OH) ---> N + $H_iO$

(3) N + NO ---> $N_2$ + O

(4) NO + $NH_i$ ---> $N_2$ + $H_iO$

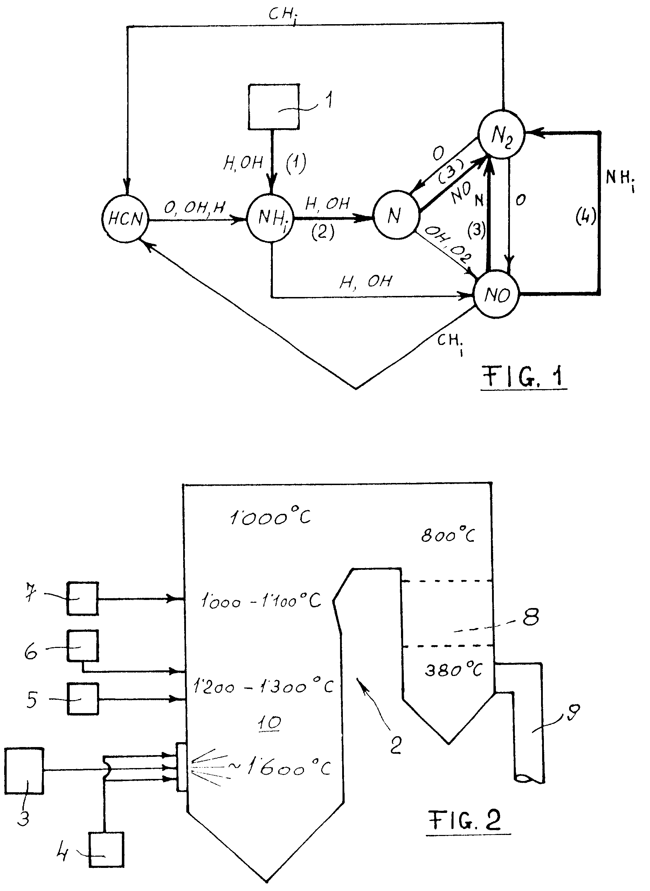

and the kinetic diagram of the process is illustrated in FIG. 1, as explained in the forward description.

The main advantages of the invented process reside in the following: u) the efficiency is at least 20% higher than the one of the conventional reburning with the same amount of secondary fuel introduced and it reduces by 60% the $NO_X$ in the gases together with affording a saving of 10% of secondary fuel and a ratio $NH_i/NO$ ranging between 1.5 and 2; the above entails a lower stoichiometric ratio fuel/oxidative in said Rich Zone and, consequently, a lower aggressiveness of the fuel gas with respect to the exchange surfaces ; uu) easy operation as the process is not so sensitive to parameters difficult to be controlled, like the stay time of the fuel in the combustion chamber and the temperature in the reducing zone; uuu) this process controls the $NH_3$ escape and ammoniac salts formation better than said process SNCR, in fact, the oxidation stage downstream ammonia injection assures a complete oxidation of the residual ammonia which means no ammonia at the chimney and no formation of ammoniac salts in the low temperature zones as a reaction of ammonia with sulphur dioxide in the smokes; iu) this process produces negligible $N_2O$ emissions: substantially, this process does not generate nitrous oxide, as SNCR process does on the contrary; in the invented process, the combination between $NH_i$ and NO takes place in the temperature span of about 1200°C - 1300°C where simultaneously the following reactions take place: NO + $NH_i$ ---> $N_2O$ + $H_i$ $N_2O$ + H ---> $N_2$ + OH, the second of which takes place much more rapidly than the first one; anyway, oxidation under high temperature subsequent to $NO_X$ reduction allows of destruction of possible nitrous oxide.

One way of carrying out the invention is illustrated in detail herebelow by an example referred to the accompanying drawings in which:

FIG. 1 is a kinetic diagram of the process and
FIG. 2 is a diagram of the process.

Fig. 1 shows the above specified reactions (1), (2), (3), (4) as caused by injecting ammoniac products 1 in a boiler wherein the invented process is executed; this diagram does not require particular explanations for a person skilled in the combustion chemistry.

Fig. 2 in general shows that in a first region in a boiler 2 primary fuel is introduced from a source of primary fuel 3 together with primary air from a source of primary air 4 , said first region being conventionally referred to as primary zone. Above said primary zone, in three regions spaced vertically towards the boiler top, secondary fuel is introduced from a source of secondary fuel 5, ammonia from a source of ammonia 6 and secondary air from a source of secondary air 7. Downstream the real boiler there is the economizer 8 and, then, the smoke outlet 9. In particular, the figure also shows the temperature ranges as generated in the different boiler regions wherein said fluids are introduced. The operation in a high duty boiler supplied in the primary zone with fuel oil is as follows: fuel oil and primary air are injected conventionally in the combustion chamber 10 where it is assumed that the gas average temperature is about 1600°C; in the above region where the gas temperature is between 1200°C and 1300°C natural gas is injected at a rate of 300 - 15,000 $Nm^3$/h; adjacent to said region where gases still are at 1200°C - 1300°C ammonia is injected at a rate of 380 - 2800 $Nm^3$/h; in the above region where the gas temperature is about 1000°C - 1100°C secondary air is injected at a rate of 10,000 - 32,000 $Nm^3$/h.

According to the prior art, the injection of said fluids is supported with addition of recirculating smokes in order to cause the best mixing of the different fluids. Ammonia products may also be mixed directly with the secondary fuel.

**Claims**

1. A process for reducing nitric oxides in a flue gas wherein primary fuel (3) and primary air (4) are injected for burning in a primary zone in a boiler (2) combustion chamber and secondary fuel (5) is injected for burning immediately out of said primary zone, characterized in that said secondary fuel (5) is injected in that zone of the combustion chamber where the gases are at a temperature approximately ranging from 1200°C and 1300°C in order to cause in the flue gases a slightly oxidative and reducing stroichiometry; a reducing agent (6) producing $NH_i$ radicals is injected close to said primary region; secondary air (7) is injected in a higher region where gases have a temperature ranging about from 1100°C and 1000°C in order to oxidize completely the residual fuel and the non reduced residual radicals $NH_i$.

2. A process according to claim 1 characterized in that the amount of said secondary fuel (5) may be varied for producing from 5% to 15% of the total heat required from the boiler.

3. A process according to claims 1 and 2 characterized in that said reducing agent (6) is an ammoniac product.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 7, no. 227 (M-248)(1372) 7 October 1983 & JP-A-58 120 004 ( MITSUI ZOSEN K.K. ) 16 July 1983 * abstract * | 1,3 | B01D53/34 |
| A,P | DE-A-3 943 084 (SAARBERGWERKE AG) * claims 1-5; figure 1 * | 1,3 | |
| A | BRENNSTOFFE-WäRME-KRAFT vol. 38, no. 1/2, February 1986, DüSSELDORF,DE K.D.RENNERT: 'Möglichkeiten der Stickstoffreduzierung in Feuerräumen' * the whole document * | 1-3 | |
| A,D | EP-A-0 373 351 (ENTE NAZIONALE PER L'ENERGIA ELETTRICA) * the whole document * | 1-3 | |
| | | | **TECHNICAL FIELDS SEARCHED (Int. Cl.5)** |
| | | | B01D<br>F23C |

The present search report has been drawn up for all claims

| Place of search | Date of completion of the search | Examiner |
|---|---|---|
| BERLIN | 18 MAY 1992 | BERTRAM H.E.H. |